**Europäisches Patentamt**

**European Patent Office**

**Office européen des brevets**

(19)

(11) Numéro de publication: **0 168 321**
**B1**

(12)

# FASCICULE DE BREVET EUROPÉEN

(45) Date de publication du fascicule du brevet:
18.05.88

(51) Int. Cl.⁴: **F 16 K 31/00**

(21) Numéro de dépôt: **85401368.7**

(22) Date de dépôt: **06.07.85**

(54) Electrovanne à effet piézo-électrique.

(30) Priorité: **06.07.84 FR 8410834**

(43) Date de publication de la demande:
**15.01.86 Bulletin 86/3**

(45) Mention de la délivrance du brevet:
**18.05.88 Bulletin 88/20**

(84) Etats contractants désignés:
**DE GB IT**

(56) Documents cité:
**DE-A-3 006 231**
**FR-A-2 491 270**
**US-A-3 995 813**
**US-A-4 022 166**

(73) Titulaire: **SOLEX, 19, rue Lavoisier, F-92002 Nanterre Cédex (FR)**
Titulaire: **REGIE NATIONALE DES USINES RENAULT, Boîte postale 103 8-10 avenue Emile Zola, F-92109 Boulogne- Billancourt (FR)**

(72) Inventeur: **Micard, Guy, 3, rue Franklin Roosevelt, F-78360 Montesson (FR)**

(74) Mandataire: **Fort, Jacques, CABINET PLASSERAUD 84, rue d'Amsterdam, F-75009 Paris (FR)**

LIBER, STOCKHOLM 1988

## Description

La présente invention a pour objet une électrovanne du type comportant un boîtier dans lequel est ménagé un passage de fluide et un organe d'obturation déplaçable dans le boîtier entre deux positions (pleine ouverture et ouverture faible ou nulle), les déplacements de l'organe étant commandés par au moins un élément piézo-électrique. L'invention trouve une application particulièrement importante, bien que non exclusive, dans les systèmes d'alimentation d'un moteur à combustion interne en carburant liquide sous une différence de pression modérée.

On connait déjà des vannes utilisant l'effet piézo-électrique dit "inverse" c'est-à-dire la déformation d'un élément piézo-électrique sous l'action d'un champ électrique. Les déplacements que l'on peut ainsi obtenir restent très faibles de l'ordre de 0,5 micron par millimètre d'épaisseur pour un champ électrique de $10^6$ volts par mètre. Pour augmenter le déplacement disponible, on a proposé d'empiler plusieurs éléments comme cela est décrit dans les brevets américains U.S.4 022 166 et U.S.3 995 813, mais l'augmentation obtenue reste faible. On a également proposé de faire travailler l'élément piézo-électrique à sa fréquence de résonance, afin d'obtenir une amplitude maximale d'oscillation. Cette solution a, entre autres inconvénients, celui d'imposer la fréquence de travail et le rapport cyclique d'ouverture de la vanne, de sorte qu'on ne peut agir que sur l'amplitude du signal de commande pour régler le débit fourni. De plus, les déplacements obtenus restent encore faibles.

L'invention vise à obtenir, dans une électrovanne du type ci-dessus défini des déplacements notablement accrus de l'obturateur. Elle vise également à écarter la nécessité de travailler à une fréquence imposée et/ou avec un rapport cyclique égal à 1/2.

Dans ce but, l'invention propose notamment une électrovanne conforme à la revendication 1.

On voit que le rôle de l'élément piézo-électrique (ou de chaque élément) dans une vanne suivant l'invention est très différent de celui qu'il a dans une vanne de type connu. Il agit non plus en imposant son élongation à l'obturateur, mais en lui communiquant une vitesse initiale. On peut ainsi obtenir des déplacements de plusieurs centaines de microns qui ont l'avantage supplémentaire d'être indépendants de l'élongation propre de l'ensemble piézoélectrique, donc des variations de cette élongation en fonction de la température et du vieillissement. Le seul paramètre important est la vitesse que communique l'élément piézo-électrique à l'obturateur.

La seule condition à remplir est que l'énergie cinétique que communique l'élément piézo-électrique à l'obturateur soit supérieure au travail de la force de rappel mécanique de l'obturateur vers sa position initiale, et ce pour la course souhaitée du clapet.

Dans un premier mode de réalisation de l'électrovanne, qu'on peut qualifier de monostable, l'obturateur est associé à des moyens de rappel vers sa position d'origine qui exercent une force qui augmente avec l'élongation. Ces moyens sont par exemple constitués par un ressort de rappel. Dans ce cas, la durée d'ouverture de la vanne est égale au "temps de vol" de l'obturateur et correspond à un volume injecté déterminé. Le débit (ou le volume) total fourni est obtenu par accumulation de volumes élémentaires, de sorte que l'on règle le débit ou le volume transmis par action sur la fréquence d'excitation ou sur le nombre d'excitations. Le débit maximum que pourra transmettre l'électrovanne lorsque des moyens de rappel tendent à fermer l'obturateur sera déterminé par la fréquence maximale que l'on peut obtenir, fixée par le temps de vol.

Dans un second mode de réalisation, qu'on peut qualifier de bistable, l'obturateur est associé à des moyens de rappel dont la force de rappel diminue avec l'élongation, s'annule, puis s'inverse, généralement au milieu de l'intervalle entre les deux positions que peut prendre l'obturateur. Le retour à la position d'origine impose une seconde action ou percussion, de sens inverse de la première. Les moyens de rappel peuvent alors être constitués par des forces d'aimantation. Deux variantes sont possibles, le passage d'une position à l'autre étant toujours provoqué par la contraction ou la dilatation d'un élément piézo-électrique. Dans une des variantes, généralement plus avantageuse car elle conduit à un encombrement moindre, l'électrovanne comprend un empilement de céramiques piézo-electriques minces. Le dilatation de l'empilement provoque le déplacement dans un sens, la contraction le déplacement dans l'autre sens. Dans l'autre variante, deux éléments piézo-électriques différents sont utilisés pour projeter l'obturateur dans les deux directions opposées. Dans les deux cas, le paramètre de commande principal n'est plus la fréquence, mais le rapport cyclique des signaux appliqués dans le premier cas, le déphasage de deux signaux dans le second.

L'invention sera mieux comprise à la lecture de la description qui suit de modes particuliers de réalisation de l'invention donnés à titre d'exemples non limitatifs. La description se réfère aux dessins qui l'accompagnent dans lesquels:

- la figure 1 est un schéma de principe d'une électrovanne bistable suivant un premier mode de réalisation représentée en coupe suivant un plan passant par l'axe;
- la figure 2, similaire à la figure 1, montre une constitution possible de l'électrovanne dont le principe est donné en figure 1;
- les figures 3 et 4, similaires à la figure 2, montrent deux autres modes de réalisation.

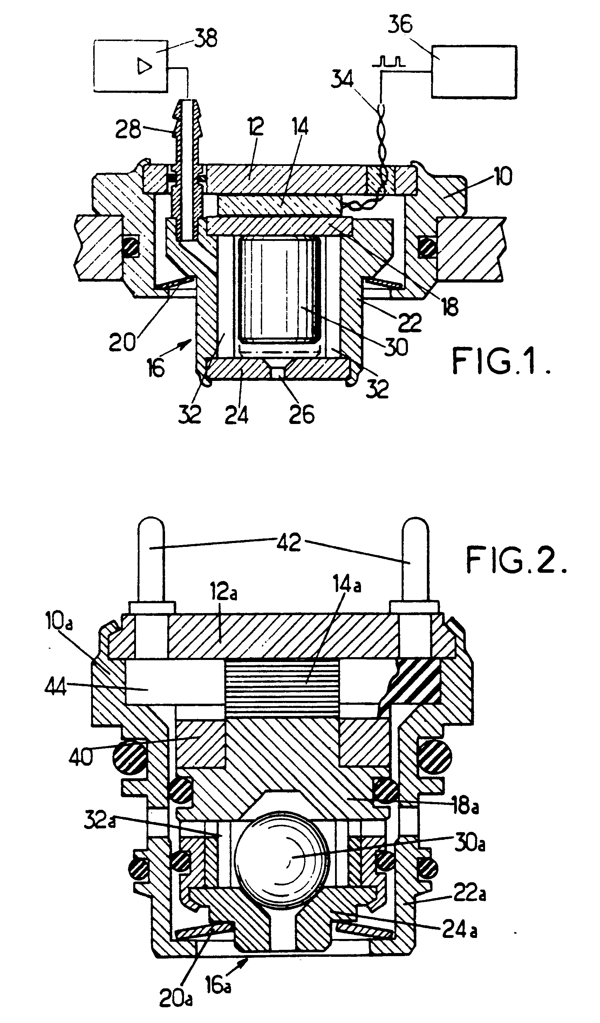

L'électrovanne dont un schéma de principe est donné en figure 1 comporte une douille 10 de montage, munie d'une rainure de réception d'un joint d'étanchéité torique, à laquelle est fixée, par exemple par sertissage, une plaque de base 12. Un élément piézo-électrique 14 de type classique, généralement constitué par un empilement de céramiques piézo-électriques, est serré entre la plaque de base 12 et le fond 18 d'un boîtier 16 par un élément élastique de précontrainte 20, qui sera généralement constitué par une rondelle Belleville ou une bague d'élastomère. Le boîtier comporte également une chemise 22 et un siège 24 percé d'un trou central 26 de passage du fluide dont l'écoulement doit être commandé par l'électrovanne. L'intérieur du boîtier 16 constitue une chambre cylindrique reliée à un embout 28 d'amenée de fluide. Dans le boîtier est placé un obturateur 30 de forme cylindrique, de diamètre tel qu'il soit guidé par la chemise 22, de longueur telle qu'il puisse se déplacer entre une position d'appui sur le fond 18 (en traits pleins sur la figure 1) et une position de fermeture du trou 26 (en traits mixtes). Des rainures internes 32 pratiquées dans la chemise permettent au carburant de se répartir dans la chambre et d'arriver au trou 26 lorsque l'obturateur 30 est dans sa position de pleine ouverture en appui contre le fond 18.

Dans ce mode de réalisation l'obturateur 30 doit être soumis à des forces de rappel qui diminuent avec la distance à partir de sa position d'origine pour s'inverser à mi-longueur de sa course. On peut notamment utiliser des forces magnétiques. Pour cela, l'obturateur 30 peut être constitué par un aimant tandis que le fond 18 et le siège 24, servant l'un et l'autre de butée, sont constitués par des plaques en matériau ferromagnétique, reliées par la chemise 22 qui est alors en matériau a-magnétique.

L'élément piézo-électrique 14 présente des faces opposées métallisées reliées à un conducteur de sortie 34 pouvant être relié à un générateur 36 de signaux carrés ayant un rapport cyclique réglable.

Dans le cas ou l'électrovanne est utilisée pour constituer un actuateur permettant d'amener du carburant pur ou à l'état de mélange primaire dans un carburateur ou injecteur basse pression, l'embout 28 sera relié à une source 38 d'amenée de combustible à pression déterminée. Le générateur 36 pourra fournir des impulsions à fréquence fixe ou au contraire à la fréquence d'allumage.

Le fonctionnement de l'électrovanne de la figure 1 est alors le suivant. L'obturateur 30 étant supposé à l'origine en appui sur le fond 18, le front montant du signal carré émis par le générateur 36 provoque la dilatation de l'élément 14 dans le sens axial. Cette dilatation brutale projette l'obturateur 30 vers le siège 26 à une vitesse déterminée. Dès que l'obturateur 30 a dépassé le milieu de sa course, les forces magnétiques qui s'exercent sur lui tendent à l'attirer vers le siège 24 puis à le maintenir. Lorsque le front descendant du signal carré est appliqué à l'élément 14, celui-ci se contracte. Le boîtier 16 suit cette contraction sous l'action de l'élément élastique 20. Le siège 24 renvoie l'obturateur 30 vers sa position d'origine avec une vitesse sensiblement égale à sa vitesse d'aller.

On voit que la course utile de l'obturateur 30 est indépendante de l'extension propre de l'élément piézo-électrique 14.

Le mode de réalisation de la figure 2, où les éléments correspondant à ceux de la figure 1 portent le même numéro de référence affecté de l'indice a, se différencie essentiellement du premier en ce que l'obturateur 30a est constitué par une bille en matériau ferromagnétique et non pas par un aimant permanent, tandis qu'un aimant permanent est incorporé au boîtier. La bague constitue, avec le fond 12a, un corps d'injecteur. L'élément piézo-électrique 14a est serré entre la plaque de base 12a et le fond 18a du boîtier par l'élément élastique de précontrainte 20a. L'aimant permanent unique de rappel 40 est placé autour d'une partie rétrécie du fond 18a. Dans ce mode de réalisation l'ensemble du boîtier (fond 18a, chemise 22a et siège 24a) est en matériau ferromagnétique pour transmettre les lignes de force du champ magnétique de l'aimant permanent 40. Cette solution présente, par rapport à celle schématisée en figure 1, l'avantage de permettre de respecter plus facilement les tolérances d'usinage requises pour l'obturateur, une bille en acier 30a pouvant avoir des tolérances plus serrées qu'une pièce cylindrique usinée en matériau utilisable pour former un aimant permanent, tel qu'une ferrite. De plus, pour un obturateur de même masse, cette solution permet de diminuer notablement la force parasite de pression qui doit être surmontée pour soulever l'obturateur de son siège. Enfin, la portée sphérique d'une bille sur une paroi en forme de cône offre une meilleure étanchéité qu'un appui plan sur plan.

Sur la figure 2 les liaisons électriques ont été représentées sous forme de broches 42 reliées à des métallisations de l'élément 14a par des fils protégés par une bague 44 en matériau isolant (matière plastique par exemple).

Le dernier front reçu par l'élément piézo-électrique 14 ou 14a étant un front descendant, les électrovannes des figures 1 et 2 seront du type ouvert au repos. Cette solution est celle qui est généralement utilisée dans le cas d'un actuateur pour carburateur, afin qu'une panne du système électrique autorise le fonctionnement du moteur. Mais on peut également réaliser des électrovannes commandées de telle sorte que l'obturateur soit appliqué sur son siège au repos.

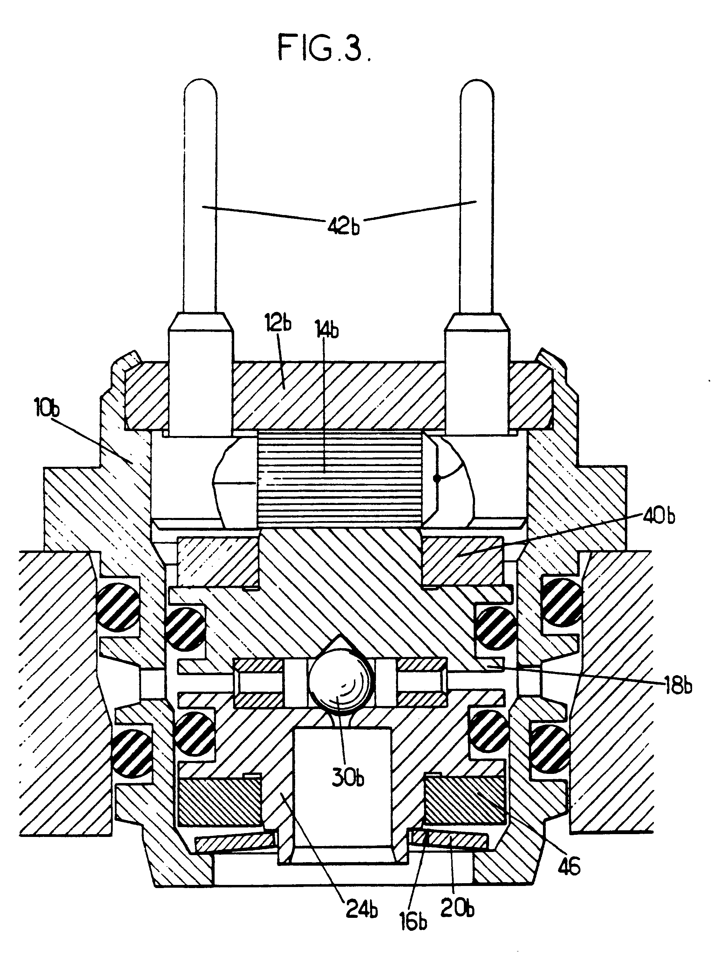

Le mode de réalisation de la figure 3, où les éléments correspondant à ceux de la figure 2 sont désignés par le même numéro de référence affecté de l'indice b, se différencie essentiellement du précédent en ce qu'il comporte deux aimants permanents de rappel 40b et 46. Comme dans le cas de la figure 2 l'amenée de carburant est effectuée dans un espace annulaire ménagé autour du corps d'injecteur et délimitée par des joints toriques.

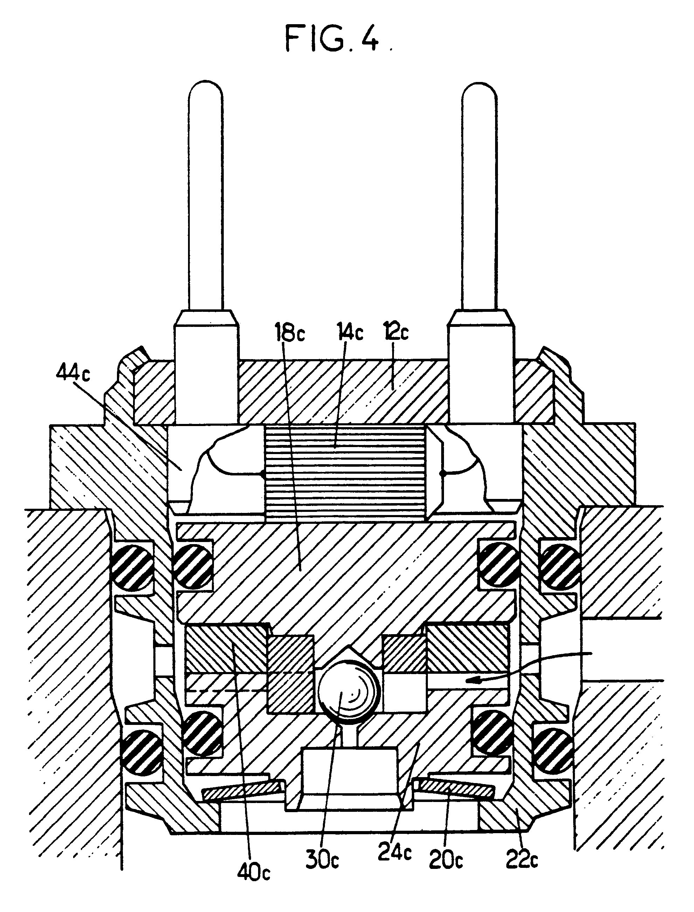

La Figure 4, où les éléments correspondant à ceux de la Figure 2 sont désignés par le même numéro de référence avec l'indice c, montre un mode de réalisation qui diffère de celui de la Figure 2 essentiellement en ce que l'aimant permanent 40c est placé entre la pièce 24c munie de siège et du trou de sortie et le fond 18c, ce qui améliore le circuit magnétique.

**Revendications**

1. Electrovanne comportant un boîtier (16, 16a, 16b) dans lequel est ménagé un passage de fluide et un organe d'obturation (30, 30a, 30b, 30c) déplaçable entre deux positions, dont les déplacements sont commandés par au moins un élément piézo-électrique (14, 14a, 14b, 14c), caractérisée en ce que l'organe d'obturation (30, 30a, 30b, 30c) est indépendant de l'élément piézo-électrique (14, 14a, 14b, 14c), est associé à cet élément de façon à être projeté avec une vitesse déterminée d'une de ses positions à l'autre en réponse à l'excitation ou à la cessation d'excitation de l'élément piézo-électrique, et est associé à des moyens de rappel (20, 20a, 20b, 20c) tendant à maintenir l'obturateur dans sa position d'origine.

2. Electrovanne suivant la revendication 1, caractérisée en ce que les moyens de rappel (20, 20a, 20b, 20c) tendant à maintenir l'obturateur (30, 30a, 30b, 30c) dans sa position d'origine sont d'un type exerçant une force de rappel qui augmente avec l'élongation, tels qu'un ressort.

3. Electrovanne suivant la revendication 2, caractérisée en ce que l'élément piézo-électrique est prévu pour être associé à un générateur d'impulsions électriques à fréquence variable.

4. Electrovanne suivant la revendication 1, caractérisée en ce que l'obturateur (30, 30a, 30b, 30c) est associé à des moyens de rappel dont la force de rappel s'inverse lorsque l'obturateur a parcouru la moitié de sa course à partir de sa position d'origine.

5. Electrovanne suivant la revendication 4, caractérisée en ce que l'obturateur est déplaçable entre un siège (24, 24a, 24b, 24c) constituant une première butée et un fond (18, 18a, 18b, 18c) constituant une seconde butée, les moyens de rappel de l'obturateur étant des moyens exerçant une force magnétique tendant à appliquer l'obturateur sur le fond ou le siège suivant qu'il est plus proche du fond ou du siège.

6. Electrovanne suivant la revendication 5, caractérisée en ce que l'obturateur (30) est un aimant permanent et en ce que le fond (18) et le siège (24) sont constitués en matériau ferromagnétique et sont reliés par une chemise (22) en matériau non ferromagnétique.

7. Electrovanne suivant la revendication 5, caractérisée en ce que l'obturateur (30a, 30b, 30c) est en matériau ferromagnétique et contenu dans un boîtier comportant au moins un aimant (40, 40b, 40c) et un circuit ferromagnétique (18a, 22a, 24a).

8. Electrovanne suivant l'une quelconque des revendications 4 à 7, caractérisée en ce qu'elle comporte un seul élément piézo-électrique (14, 14a, 14b, 14c) serré entre une plaque fixe (12, 12a, 12b, 12c) et un fond appartenant à un boîtier (16, 16a, 16b) repoussé par un élément élastique de précontrainte (20, 20a, 20b, 20c) contre l'élément piézo-électrique, de sorte que la dilatation de l'élément piézo-électrique exerce une percussion sur l'obturateur par l'intermédiaire du fond tandis que sa contraction provoque l'application d'une percussion de l'obturateur par le boîtier soumis à l'action de l'élement élastique de précontrainte.

**Claims**

1. Electrically controlled valve comprising a casing (16, 16a, 16b) defining a fluid passage and a closure member (30, 30a, 30b, 30c) movable between two positions, whose movements are controlled by at least one piezo-electric element (14, 14a, 14b, 14c),
characterized in that the closure member (30, 30a, 30b, 30c) is separate from the piezo-electric element (14, 14a, 14b, 14c), is associated with said element so as to be projected from one to the other of its two positions with a predetermined speed responsive to energization or de-energization of the piezo-electric element and is associated with return means (20, 20a, 20b, 20c) which bias the closure member toward its original position.

2. Electrically controlled valve according to claim 1, characterized in that the return means (20, 20a, 20b, 20c) which bias the closure member (30, 30a, 30b, 30c) toward its origin position are of a type which exerts a return force which increases when the amount of travel increases, such as a spring.

3. Electrically controlled valve according to claim 2, characterized in that the piezo-electric element is arranged for being associated with a generator delivering electrical pulses at a variable frequency.

4. Electrically controlled valve according to claim 1, characterized in that the closure member (30, 30a, 30b, 30c) is associated with return means whose return force reverses when the closure member has travelled over half of its complete travel from its original position.

5. Electrically controlled valve according to claim 4, characterized in that the closure member is arranged for movement between a seat (24) constituting a first stop and a bottom (18) constituting a second stop, the closure member return means being means which exert a magnetic force tending to apply the closure member onto the bottom or onto the seat depending on whether it is closer to the bottom or the seat.

6. Electrically controlled valve according to claim 5, characterized in that the closure member (30) is a permanent magnet and in that the bottom (18) and the seat (24) are constituted of ferromagnetic material and are connected by a thimble (22) of non-ferromagnetic material.

7. Electrically controlled valve according to claim 5, characterized in that the closure member (30a, 30b, 30c) is of ferromagnetic material and is contained in a case comprising at least one magnet (40, 40b, 40c) and a ferromagnetic circuit (18a, 22a, 24a).

8. Electrically controlled valve according to any one of claims 4-7, characterized in that it comprises a single piezo-electric element (14, 14a, 14b, 14c) clamped between a fixed plate (12, 12a, 12b, 12c) and a bottom belonging to a casing (16, 16a, 16b) forcibly applied by a resilient prestressing element (20, 20a, 20b, 20c) against the piezo-electric element whereby expansion of the piezo-electric element exerts a percussion onto the closure member through the bottom while contraction thereof causes application of a percussion to the closure member by the case subjected to the action of the resilient prestressing element.

**Patentansprüche**

1. Magnetventil umfassend ein Gehäuse (16, 16a, 16b), in dem eine Fluiddurchführung ausgespart ist, und ein zwischen zwei Positionen verstellbares Verschlußorgan (30, 30a, 30b, 30c), dessen Verstellungen durch wenigstens ein piezoelektrisches Element (14, 14a, 14b, 14c) betätigt werden, dadurch gekennzeichnet, daß das Verschlußorgan (30, 30a, 30b, 30c) vom piezoelektrischen Element (14, 14a, 14b, 14c) unabhängig ist, diesem Element derart zugeordnet ist, daß es mit einer bestimmten Geschwindigkeit von einer seiner Positionen zur anderen ansprechend auf die Erregung oder das Aufhören der Erregung des piezoelektrischen Elementes vorgeschleudert wird, und Rückstellmitteln (20, 20a, 20b, 20c) zugeordnet ist, die die Tendenz haben, den Verschluß in seiner Ursprungsposition festzuhalten.

2. Magnetventil nach Anspruch 1, dadurch gekennzeichnet, daß die Rückstellmittel (20, 20a, 20b, 20c), die die Tendenz haben, den Verschluß (30, 30a, 30b, 30c) in seiner Ursprungsposition festzuhalten, von einem Typ sind, der eine Rückstellkraft ausübt, die mit Verlängerung zunimmt, wie eine Feder.

3. Magnetventil nach Anspruch 2, dadurch gekennzeichnet, daß das piezoelektrische Element vorgesehen ist, um einem Generator von elektrischen Impulsen mit variabler Frequenz zugeordnet zu werden.

4. Magnetventil nach Anspruch 1, dadurch gekennzeichnet, daß der Verschluß (30, 30a, 30b, 30c) Rückstellmitteln zugeordnet ist, deren Rückstellkraft sich umkehrt, wenn der Verschluß die Hälfte seines Hubs ausgehend von seiner Ursprungsposition durchlaufen hat.

5. Magnetventil nach Anspruch 4, dadurch gekennzeichnet, daß der Verschluß zwischen einem einen ersten Anschlag bildenden Sitz (24, 24a, 24b, 24c) und einem einen zweiten Anschlag bildenden Boden (18, 18a, 18b, 18c) verstellbar ist, wobei die Rückstellmittel des Verschlusses Mittel sind, die eine Magnetkraft ausüben, die dazu neigt, den Verschluß auf den Boden oder den Sitz zu drücken, je nach dem, ob er dem Boden oder dem Sitz näher ist.

6. Magnetventil nach Anspruch 5, dadurch gekennzeichnet, daß der Verschluß (30) ein Dauermagnet ist und daß der Boden (18) und der Sitz (24) aus ferromagnetischem Material gebildet sind und durch einen Mantel (22) aus nichtferromagnetischem Material verbunden sind.

7. Magnetventil nach Anspruch 5, dadurch gekennzeichnet, daß der Verschluß (30a, 30b, 30c) aus ferromagentischem Material und in einem Gehäuse enthalten ist, das wenigstens einen Magneten (40, 40b, 40c) und einen ferromagnetischen Kreis (18a, 22a, 24a) umfaßt.

8. Magnetventil nach einem beliebigen der Ansprüche 4 bis 7, dadurch gekennzeichnet, daß es ein einziges piezoelektrisches Element (14, 14a, 14b, 14c) umfaßt, das zwischen einer festen Platte (12, 12a, 12b, 12c) und einem Boden eingeklemmt ist, der zu einem durch ein elastisches Element (20, 20a, 20b, 20c) zur Vorspannung gegen das piezoelektrische Element zurückgedrückt wird, so daß die Ausdehnung des piezoelektrischen Elementes einen Stoß auf den Verschluß mittels des Bodens ausübt, während seine Kontraktion die Anwendung eines Stoßes des Verschlusses gegen das der Wirkung des elastischen Elementes zur mechanischen Vorspannung unterworfene Gehäuse herbeiführt.

FIG.1.

FIG.2.

# FIG.3.

# FIG. 4 .